# FASCICULE DE BREVET EUROPEEN

(11) **EP 0 575 249 B1**
(45) Date de publication et mention de la délivrance du brevet: **31.07.1996**
(21) Numéro de dépôt: 93401542.1
(22) Date de dépôt: 16.06.1993
(51) Int. Cl.: H02K 3/50, H02K 3/42

(54) **Dispositif de support élastique des têtes de bobines stator**
Einrichtung zur elastischen Lagerung von Statorwickelköpfe
Resilient supporting device for stator winding heads

(30) Priorité: 17.06.1992 FR 9207344
(43) Date de publication de la demande: 22.12.1993
(73) Titulaire: GEC ALSTHOM ELECTROMECANIQUE SA, 75116 Paris (FR)
(72) Inventeur: Besson, Alain, F-90300 Valdoie (FR)
(74) Mandataire: Fournier, Michel

(56) Documents cités:
- DE-A- 2 161 139
- FR-A- 2 254 902
- GB-A- 1 289 826
- GB-A- 1 289 827
- US-A- 3 691 416
- US-A- 3 991 334
- US-A- 4 054 809

## Description

L'invention concerne un dispositif de support élastique des têtes de bobines stator d'une machine électrique tournante, en particulier pour turboalternateurs.

Les têtes de bobines stator nécessitent d'être supportées de manière élastique. La raison en est, qu'elles sont soumises à des contraintes et des déformations dues à d'éventuels courts-circuits, à des à-coups de courant, à la dilatation thermique ou à d'autres causes.

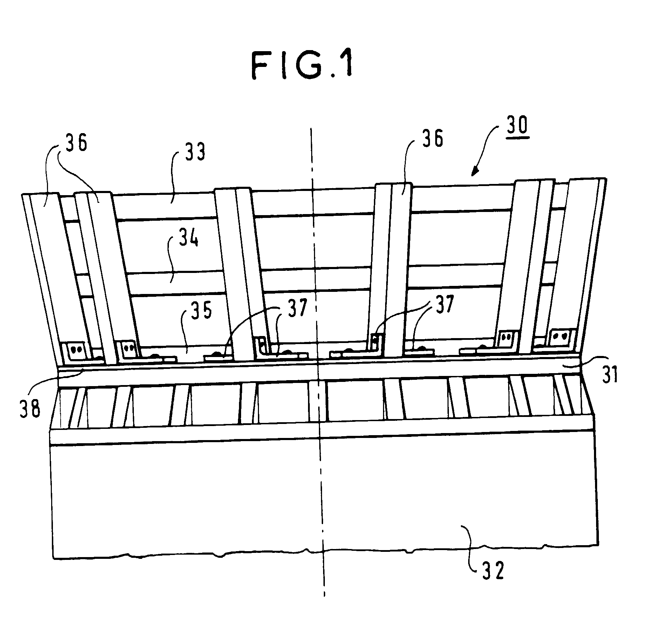

Les têtes de bobines stator sont supportées par une cage de soutènement formée de plusieurs anneaux concentriques au circuit magnétique et reposant sur des supports isolants répartis régulièrement autour du stator. La cage de soutènement est fixée sur le plateau de serrage du stator par l'intermédiaire d'équerres, généralement en inox amagnétique (voir la figure 1). Les équerres ont leurs premiers côtés fixés au plateau de serrage, avec intercalation d'un écran amortisseur. Elles ont leurs seconds côtés fixés aux supports isolants de la cage de soutènement. La flexibilité des équerres donne l'élasticité voulue aux têtes de bobines stator.

L'utilisation d'équerres pose un certain nombre de problèmes. Leur répartition angulaire sur le plateau de serrage est difficile à obtenir avec précision. En cours d'exploitation, certaines équerres peuvent se casser en fonction des sollicitations et créer ainsi des dissymétries nuisibles au bon fonctionnement de la machine. Il existe aussi un manque de certitude sur les appuis des équerres, un mauvais appui provoquant un décalage et des vibrations du bobinage.

DE-A-2 161 139 concerne un dispositif de support élastique des têtes de bobines stator d'une machine électrique tournante, comprenant une première couronne montée, avec jeu à froid, sur le plateau de serrage, une cage de soutènement ayant des supports dont une extrémité est guidée en déplacement radiale dans des rainures façonnées dans la couronne, et l'autre extrémité est solidarisée à une deuxième couronne Le dispositif selon l'invention a pour but d'améliorer la tenue mécanique du soutènement et du calage des têtes de bobines stator. Ceci est obtenu en remplaçant les équerres métalliques utilisées jusqu'à présent par une couronne présentant un effet de ressort.

L'utilisation d'une couronne à la place d'équerres permet la séparation des fonctions fixation de l'écran amortisseur et fixation du soutènement. Cette couronne peut être réalisée en inox amagnétique, mais aussi en un matériau formé de fibre de verre tissée et enrobée de résine époxy.

Cependant, le dispositif décrit ci-dessus est difficile à monter, et la liaison glissante existant entre les supports et la première couronne affecte sensiblement le soutènement des têtes de bobine.

Le dispositif selon l'invention a pour but d'améliorer la tenue mécanique du soutènement et du calage des têtes de bobines stator. Ceci est obtenu en fixant les supports sur la première couronne, et en supprimant la deuxième couronne.

A cet effet l'invention concerne un dispositif de support élastique des têtes de bobines stator d'une machine électrique tournante, comprenant une cage de soutènement fixée par l'intermédiaire de supports sur le plateau de serrage de la machine, le dispositif comprenant des moyens de fixation élastique des supports sur le plateau de serrage, lesdits moyens de fixation élastique comprenant au moins une couronne, la couronne étant rendue solidaire du plateau de serrage par des moyens de solidarisation, selon l'invention, les supports sont fixés sur ladite couronne par des boulons et écrous, lesdits supports ayant un trou coopérant avec une goupille de positionnement.

Un avantage de cette nouvelle structure est le gain obtenu en temps de montage. Les différents éléments sont également plus faciles à assembler.

Le dispositif peut comprendre en outre un écran amortisseur disposé entre le plateau de serrage et la couronne et fixé au plateau de serrage de manière indépendante de la couronne. Par rapport aux dispositifs selon l'art antérieur, l'écran amortisseur comporte moins de trous de fixation. Il est donc plus simple à réaliser et son montage peut se faire plus rapidement.

Les moyens de solidarisation de la couronne sur le plateau de serrage peuvent comprendre des douilles de centrage. Ceci permet la dépose rapide et précise de la couronne sur le plateau de serrage.

La couronne peut être avantageusement formée de plusieurs secteurs solidarisés entre eux, trois ou quatre par exemple. Ceci permet d'usiner les secteurs en une même opération par simple superposition.

Un autre avantage de la présente invention est que la couronne nécessite moins de points de fixation sur le plateau de serrage que les équerres. On peut donc simplement utiliser les trous de manutention du plateau de serrage pour fixer la couronne élastique. Le plateau de serrage comporte donc un nombre restreint de trous. Son usinage est donc plus simple et plus rapide.

L'invention sera mieux comprise et d'autres avantages et particularités apparaîtront à la lecture de la description qui va suivre, donnée à titre non limitatif, accompagnée des dessins annexés parmi lesquels:
- la figure 1 illustre une cage de soutènement selon l'art connu,
- la figure 2 est une vue en coupe d'une partie du dispositif selon l'invention,
- la figure 3 est une vue de dessus de la couronne élastique,
- la figure 4 est une vue de détail de la figure 2.

La figure 1 est une vue de côté d'une cage de soutènement 30 selon l'art connu et fixée sur le plateau de serrage 31 du stator 32. La cage est constituée de trois anneaux 33, 34 et 35 en bois par exemple, concentriques à l'axe du stator et régulièrement espacés. Les anneaux sont supportés par des supports 36, représentés ici de manière simplifiée, régulièrement espacés autour du plateau de serrage. Chaque support 36 est fixé sur le plateau de serrage par deux équerres 37. Cette fixation est assurée par des vis avec intercalation de l'écran amortisseur 38 qui sert de protection contre les flux magnétique et électrique. Les équerres ont leurs premiers côtés fixés au plateau de serrage et leurs seconds côtés fixés aux supports isolants 36.

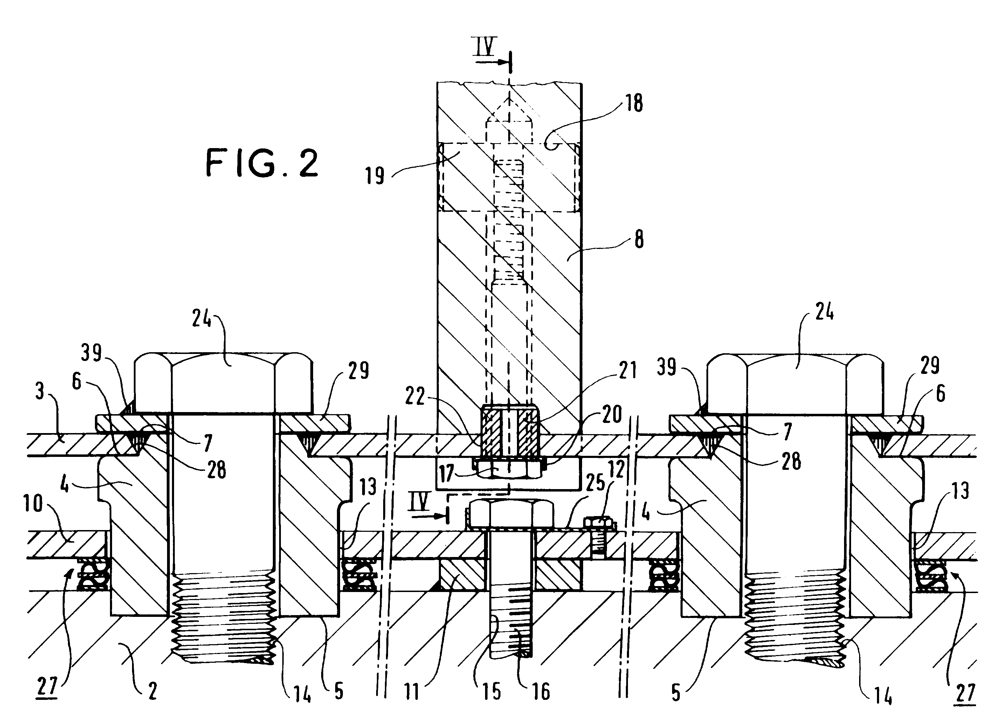

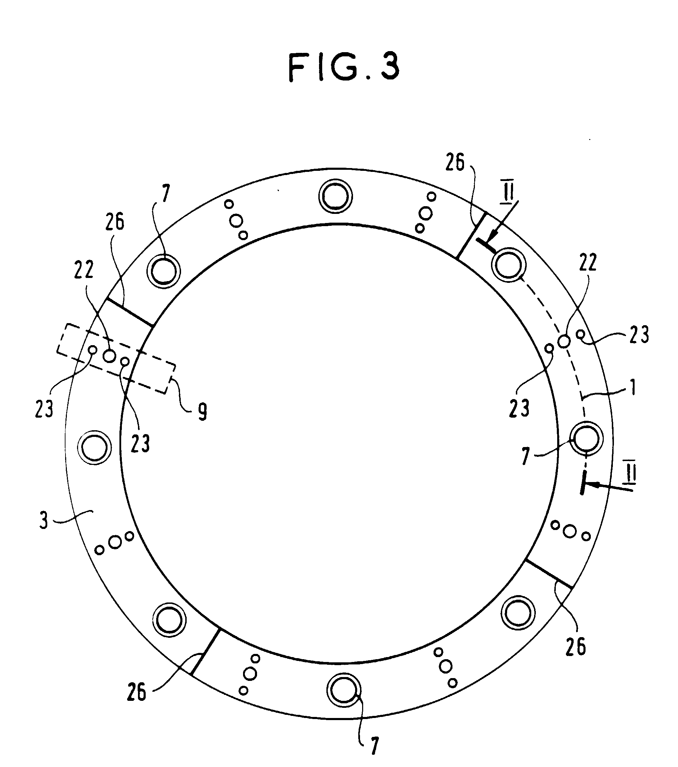

La coupe de la figure 2 a été réalisée selon l'axe médian 1 de la couronne (voir la figure 3). On peut reconnaître le plateau de serrage 2 sur lequel on a disposé la couronne élastique 3 par l'intermédiaire de douilles de centrage 4. Ces douilles sont logées, sous ajustement serré, dans des lamages 5 régulièrement répartis sur le plateau de serrage. Du côté opposé au plateau de serrage, les douilles possèdent un épaulement 6 de réception de la couronne. A cet effet, la couronne 3 est percée de trous 7 chanfreinés dans lesquels s'engagent les extrémités de diamètre restreint des douilles.

Les supports isolants 8 sont fixés sur la couronne élastique 3 de manière régulière. A la figure 3, on a représenté en traits interrompus 9 l'emplacement d'un support isolant sur la couronne, à mi-chemin entre deux lamages 5.

L'écran amortisseur 10 est disposé entre le plateau de serrage 2 et la couronne élastique 3. Il est placé à une certaine distance du plateau de serrage grâce à des entretoises 11. L'écran amortisseur est percé de trous 13 permettant le passage des douilles de centrage 4.

Des trous filetés sont prévus dans le plateau de serrage: des trous filetés 14 au fond des lamages 5 pour la fixation de la couronne élastique, et des trous filetés 15 pour la fixation de l'écran amortisseur.

Pour effectuer le montage de la cage de soutènement sur la machine, on fixe d'abord l'écran amortisseur sur le plateau de serrage. On monte à part les supports isolants et les anneaux de soutènement sur la couronne élastique. On rapporte ensuite la couronne élastique équipée de la cage de soutènement sur le plateau de serrage équipé de l'écran amortisseur et des douilles de centrage.

La fixation de l'écran amortisseur 10 se fait au moyen des vis de serrage 16 traversant l'écran et les entretoises 11 pour se visser dans les trous filetés 15. La tête de la vis 16 peut être reliée définitivement à l'écran 10 grâce à un frein 25 fixé à l'écran par une vis 12.

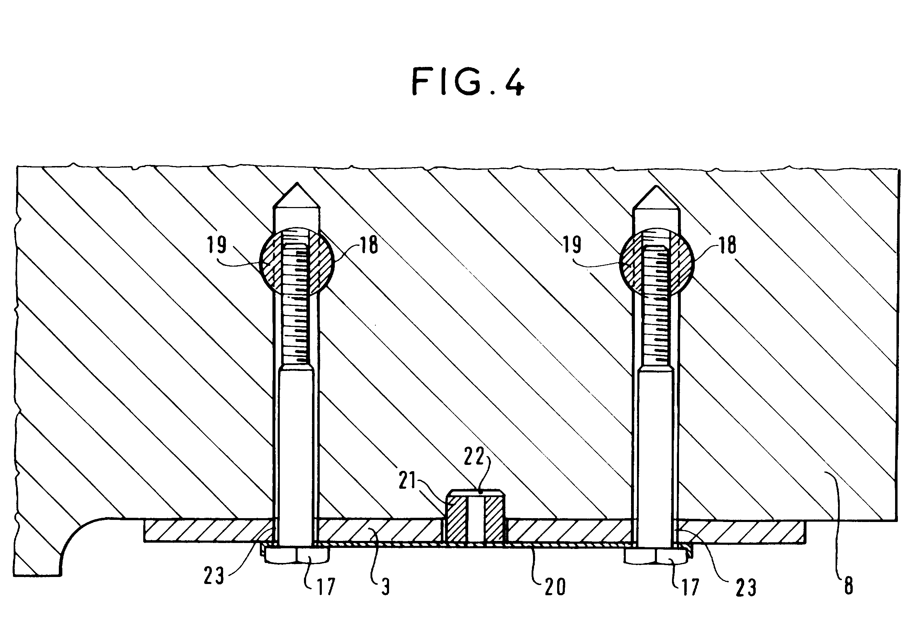

La fixation des supports isolants 8 sur la couronne 3 peut se faire par une liaison du type vis-écrou. Deux boulons 17 traversent la couronne 3 et une partie du support 8 pour déboucher dans un trou 18 usiné transversalement par rapport aux boulons (voir la figure 4). Le support isolant 8 est fixé à la couronne grâce aux boulons 17 et aux écrous cylindriques 19 avec interposition d'un frein double 20 qui assure une liaison définitive. Entre les boulons 17, une goupille 21 assure le positionnement du support isolant. Sur la figure 3, on distingue mieux les trous 23 de passage des boulons 17 dans la couronne élastique et le trou 22 de passage de la goupille 21. Les trous 22 et 23 peuvent être de diamètre identiques. La goupille est bloquée sur la couronne élastique lorsque le frein double 20 est en position sous les têtes des vis 17.

La fixation de la couronne équipée sur le plateau de serrage se fait par les vis 24 traversant les rondelles 29 et les douilles 4 pour se visser dans les trous filetés 14. Une fixation définitive peut être assurée par des cordons de soudure 28 comme cela est représenté sur la figure 2. Des points de soudure 39 fixent définitivement chaque vis 24 à sa rondelle 29.

Dans l'exemple représenté à la figure 2, l'axe de la vis 16 est confondu avec l'axe de la goupille 21.

La figure 3 montre que la couronne élastique a été réalisée à partir de quatre secteurs identiques réunis par des soudures 26. L'élasticité de la couronne 3 est due à la grande distance séparant ses points de fixation sur le plateau de serrage et aussi à la nature du matériau utilisé pour la réaliser. On utilisera de préférence de l'inox amagnétique ou un matériau formé de fibre de verre tissée et enrobée de résine époxy.

Des rondelles d'étanchéité 27 du type statifié (associant des rondelles et des éléments ressorts) peuvent être installées autour des douilles 4, entre le plateau de serrage 2 et l'écran amortisseur 10. Elles évitent ainsi les fuites du gaz de refroidissement circulant dans l'espace confiné entre le plateau de serrage et l'écran amortisseur.

La description a porté sur le cas d'un dispositif à une seule couronne. Dans le cas où le plateau de serrage est en forme de tore, on utilisera deux couronnes concentriques, de diamètres différents et disposées à des niveaux différents en remplacement des équerres disposées de la même façon.

L'effet de couronne donne une meilleure tenue mécanique à l'ensemble de soutènement et apporte moins de vibrations sur les développantes et sur les connexions, une meilleure tenue du calage de celles-ci et une longévité accrue de la machine. Les efforts sont transmis directement sur le plateau de serrage. On supprime, grâce à l'invention, les ajustages entre plateau de serrage et cage de soutènement.

Cette nouvelle conception est adaptable à tous les types d'alternateurs, qu'ils possèdent des plateaux de serrage plans ou des plateaux de serrage moulés. Sur les plateaux de serrage moulés, il est possible d'ajuster les appuis entre la couronne extérieure et la couronne intérieure à cause de la flexibilité des couronnes et par ajustage des douilles de centrage.

## Revendications

1. Dispositif de support élastique des têtes de bobines stator d'une machine électrique tournante, comprenant une cage de soutènement fixée par l'intermédiaire de supports (8) sur le plateau de serrage (2) de la machine, le dispositif comprenant des moyens de fixation élastique des supports sur le plateau de serrage, lesdits moyens de fixation élastique comprenant au moins une couronne (3), la couronne étant rendue solidaire du plateau de serrage par des moyens de solidarisation, caractérisé en ce que les supports (8) sont fixés sur ladite couronne (3) par des boulons (17) et écrous (19), lesdits supports (8) ayant un trou (22) coopérant avec une goupille de positionnement (21).

2. Dispositif selon la revendication 1, caractérisé en ce qu'il comprend en outre un écran amortisseur (10) disposé entre le plateau de serrage (2) et ladite couronne (3) et fixé au plateau de serrage de manière indépendante de la couronne.

3. Dispositif selon l'une des revendications 1 ou 2, caractérisé en ce que les moyens de solidarisation de la couronne sur le plateau de serrage comprennent des douilles de centrage (4) .

4. Dispositif selon la revendication 3, caractérisé en ce que l'écran amortisseur étant séparé du plateau de serrage par des entretoises (11), des éléments d'étanchéité (27) sont disposés entre l'écran amortisseur et les douilles de centrage (4).

5. Dispositif selon l'une quelconque des revendications 1 à 4, caractérisé en ce que la couronne est formée de plusieurs secteurs solidarisés entre eux.

6. Dispositif selon l'une quelconque des revendications précédentes, caractérisé en ce que la couronne est réalisée en inox amagnétique ou en un matériau formé de fibre de verre tissée et enrobée de résine époxy.

## Patentansprüche

1. Vorrichtung für den elastischen Halt von Statorwicklungsköpfen einer elektrischen Maschine, die einen Stützkäfig aufweist, der über Stützen (8) an der Klemmplatte (2) der Maschine befestigt ist, wobei die Vorrichtung Mittel zur elastischen Befestigung der Stützen auf der Klemmplatte aufweist, die Mittel mindestens einen Kranz (3) enthalten, der durch Befestigungsmittel an der Klemmplatte befestigt ist, dadurch gekennzeichnet, daß die Stützen (8) am Kranz (3) mittels Bolzen (17) und Muttern (19) befestigt sind und daß die Stützen (8) ein Loch (22) aufweisen, das mit einem Positionierstift (21) zusammenwirkt.

2. Vorrichtung nach Anspruch 1, dadurch gekennzeichnet, daß sie außerdem einen Dämpfungsschirm (10) aufweist, der zwischen der Klemmplatte (2) und dem Kranz (3) angeordnet und an der Klemmplatte unabhängig vom Kranz befestigt ist.

3. Vorrichtung nach einem der Ansprüche 1 oder 2, dadurch gekennzeichnet, daß die Mittel zur Befestigung des Kranzes an der Klemmplatte Zentrierhülsen (4) aufweisen.

4. Vorrichtung nach Anspruch 3, dadurch gekennzeichnet, daß der Dämpfungsschirm von der Klemmplatte durch Zwischenstücke (11) getrennt ist und daß Dichtungselemente (27) zwischen dem Dämpfungsschirm und den Zentrierhülsen (4) angeordnet sind.

5. Vorrichtung nach einem beliebigen der Ansprüche 1 bis 4, dadurch gekennzeichnet, daß der Kranz aus mehreren aneinander befestigten Sektoren besteht.

6. Vorrichtung nach einem beliebigen der vorhergehenden Ansprüche, dadurch gekennzeichnet, daß der Kranz aus unmagnetischem rostfreiem Stahl oder einem Material hergestellt wird, das aus einem mit einem Epoxyharz umhüllten Glasfasergeflecht besteht.

## Claims

1. Elastic support device for stator winding end turns of a rotating electrical machine comprising a supporting cage fixed by means of supports (8) to the clamping plate (2) of the machine, the device comprising elastic fixing means for fixing the supports to the clamping plate, said elastic fixing means comprising at least one ring (3) which is fastened to the clamping plate by fastening means, characterised in that the supports (8) are fixed to said ring (3) by bolts (17) and nuts (19), said supports (8) having a hole (22) cooperating with a locating pin (21).

2. Device according to claim 1 characterised in that it further comprises a damper screen (10) between the clamping plate (2) and said ring (3) and fixed to the clamping plate independently of the ring.

3. Device according to claim 1 or claim 2 characterised in that the means for fastening the ring to the clamping plate comprise centring bushes (4).

4. Device according to claim 3 characterised in that the damper screen is separated from the clamping plate by spacers (11) and sealing members (27) are disposed between the damper screen and the centring bushes (4).

5. Device according to any one of claims 1 to 4 characterised in that the ring is formed by a plurality of sectors fastened together.

6. Device according to any one of the preceding claims characterised in that the ring is made from amagnetic stainless steel or woven fibreglass impregnated with epoxy resin.
